# EUROPEAN PATENT APPLICATION

(11) **EP 3 107 256 A1**
(43) Date of publication of application: **21.12.2016**
(21) Application number: 14882512.8
(22) Date of filing: 21.07.2014
(51) Int. Cl.: H04L 29/06

(54) **REGISTRATION METHOD, DEVICE AND SYSTEM FOR THIRD-PARTY PAYMENT PLATFORM**

(30) Priority: 14.02.2014 CN 201410052087
(71) Applicant: ZTE Corporation, Shenzhen, Guangdong 518057 (CN)
(72) Inventor: GAO, Yang, Shenzhen Guangdong 518057 (CN); ZHANG, Lu, Shenzhen Guangdong 518057 (CN)
(74) Representative: Chimini, Francesco
(86) International application number: PCT/CN2014/082650
(87) International publication number: WO 2015/120694

(57) **Abstract**

A registration method, device and system for a third-party payment platform are provided. The method includes: a third-party payment platform sends registration information of a user to a banking system for verification; when the registration information carries first identification information, after the verification of the registration information is passed, a verification code is sent to a user corresponding to the first identification information, wherein the first identification information is user identification information stored by the banking system when the user registers in the banking system; when the registration information does not carry the first identification information, after the verification of the registration information is passed, a query instruction for querying the first identification information is sent to the banking system; the first identification information fed back by the banking system according to the query instruction is received; and the verification code is sent to the user indicated by the first identification information. By means of the technical solution provided in the disclosure, the technical problem in the related art that there is not an effective technical solution for eliminating potential security issues in the process of quick payment is solved.

## Description

### Technical Field

The disclosure relates to the field of mobile communication, and in particular to a registration method, device and system for a third-party payment platform.

### Background

In the field of electronic commerce, online payment is usually composed of a user, a business, and a bank. After the user shops on a website, the business submits generated payment information (including business information, a payment order, and payment amount) to an online banking system; the user is required to input a bank account and password on the online banking system; after passing the verification, the banking system pays the business in the payment information; then, the whole flows ends.

In the existing online payment system, the user needs to input a bank card number and password each time, which is too complicated, so a system for quick payment emerges. The system is composed of a user, a business, a third-party payment platform, and a bank. Before paying, the user needs to register on the third-party payment platform; information needing to be input by the user includes a name of a third-party payment account, a password of the third-party payment platform, a real name, a bank account, an identity number, and a cell phone number. By means of the information, the third-party payment platform binds the third-party account with the bank account. After shopping from the business, the user can use the third-party payment platform to pay. Because the bank has authorized the third-party payment platform to submit a payment request by using the name, the bank account, and the identity number, the user can complete a payment by only inputting the account and password of the third-party payment platform instead of inputting the bank account and password, which reduces the complexity of operation.

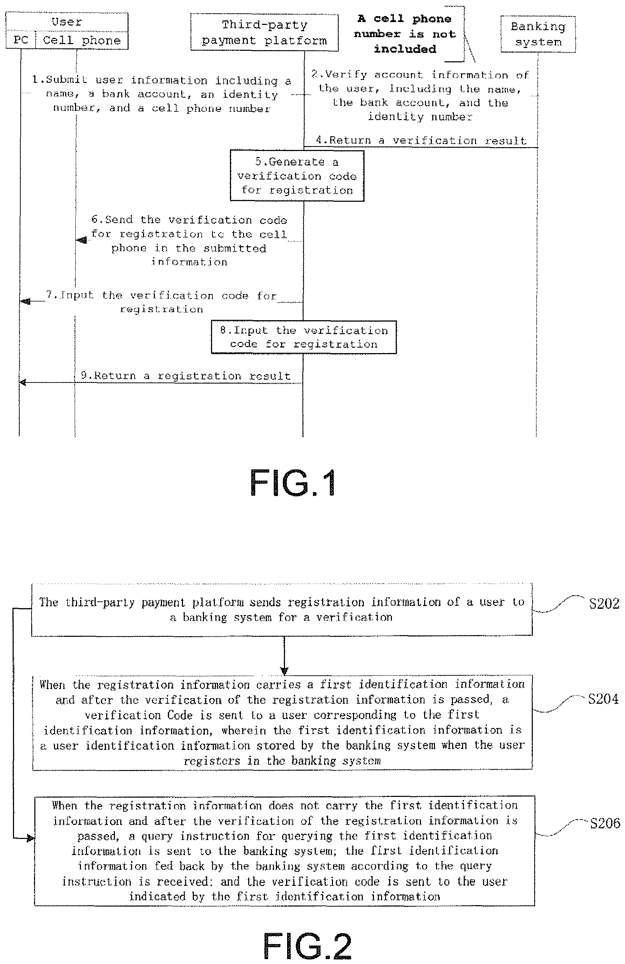

This way brings convenience to the user, but there are some potential security problems when the third-party payment platform binds the bank information, for example, unauthorized charges. The main reason is that when the user binds the bank information, the third-party payment platform does not interact with the bank, as shown in Fig. 1, which cannot ensure the consistency between the cell phone number of the bound user and the cell phone number that the user leaves in the bank. So a third person can complete registration on the third-party payment platform by using collected semi-public information including the name, the bank account, and the identity number and his/her cell phone number, and then uses the account of the third-party payment platform to pay, thereby achieving the purpose of stealing money in the bank account of others.

Aiming at the problem in the related art that there is not an effective technical solution for eliminating potential security issues in the process of quick payment, an effective solution has not been presented.

### Summary

For at least solving the problem in the related art that there is not an effective technical solution for eliminating potential security issues in the process of quick payment, the disclosure provides a registration method, device and system for a third-party payment platform.

To this end, according to an embodiment of the disclosure, a registration method for a third-party payment platform is provided, which includes that: the third-party payment platform sends registration information of a user to a banking system for verification; when the registration information carries first identification information, after the verification of the registration information is passed, a verification code is sent to a user corresponding to the first identification information, wherein the first identification information is user identification information stored by the banking system when the user registers in the banking system; when the registration information does not carry the first identification information, after the verification of the registration information is passed, a query instruction for querying the first identification information is sent to the banking system; the first identification information fed back by the banking system according to the query instruction is received; and the verification code is sent to the user indicated by the first identification information.

Preferably, the registration information further includes at least one of the followings: information of a name of the user, information of an identity card of the user, and information of a bank card number that the user registers in the banking system.

Preferably, the first identification information includes at least one of the followings: a user terminal identifier of the user, an e-mail address of the user.

Preferably, after the third-party payment platform sends the verification code to the user, the method further includes that: the third-party payment platform receives information submitted after the user inputs the verification code within a valid time period of the verification code.

Preferably, the method further includes verifying the registration information in the following way: when the registration information carries the first identification information, the first identification information is compared with second identification information of the user stored in the banking system; when the first identification information is consistent with the second identification information, the verification of the registration information is passed; or else, the verification of the registration information fails.

To this end, according to another embodiment of the disclosure, a registration method for a third-party payment platform is also provided, which includes that: the banking system receives, from the third-party payment platform, the registration information of the user and verifies the registration information; when the registration information carries the first identification information, after the verification of the registration information is passed, indication information for indicating that the verification of the registration information is passed is sent to the third-party payment platform, wherein the indication information is used for triggering the third-party payment platform to send the verification code to the user, and the first identification information is the user identification information stored by the banking system when the user registers in the banking system; when the registration information does not carry the identification information, the banking system receives the query instruction for querying the identification information which is sent by the third-party payment platform; and the banking system feeds back the identification information corresponding to the query instruction to the third-party payment platform, so that the third-party payment platform sends the verification code to a user terminal indicated by the identification information.

Preferably, that the banking system receives the registration information of the user from the third-party payment platform and verifies the registration information includes that: the banking system compares the first identification information with the second identification information of the user stored by the banking system when the user registers in the banking system; and when the first identification information is consistent with the second identification information, the banking system sends the indication information for indicating that the verification of the registration information is passed to the third-party payment platform.

To this end, according to another embodiment of the disclosure, a registration device for a third-party payment platform is also provided, which is located on the third-party payment platform and includes: a first sending module, which is configured to send the registration information of the user to the banking system for verification; a second sending module, which is configured to, when the registration information carries the first identification information, after the verification of the registration information is passed, send the verification code to the user corresponding to the first identification information, wherein the first identification information is the user identification information stored by the banking system when the user registers in the banking system; a third sending module, which is configured to, when the registration information does not carry the first identification information, after the verification of the registration information is passed, send the query instruction for querying the first identification information to the banking system; a receiving module, which is configured to receive the first identification information fed back by the banking system according to the query instruction; and a fourth sending module, which is configured to send the verification code to the user indicated by the first identification information.

To this end, according to another embodiment of the disclosure, a registration device for a third-party payment platform is also provided, which is located in the banking system and includes: a first receiving module, which is configured to receive the registration information of the user from the third-party payment platform; a verifying module, which is configured to verify the registration information; a sending module, which is configured to, when the registration information carries the first identification information, after the verification of the registration information is passed, send the indication information for indicating that the verification of the registration information is passed to the third-party payment platform, wherein the indication information is used for triggering the third-party payment platform to send the verification code to the user, and the first identification information is the user identification information stored by the banking system when the user registers in the banking system; a second receiving module, which is configured to, when the registration information does not carry the identification information, receive, from the third-party payment platform, the query instruction for querying the identification information; and a feedback module, which is configured to feed back the identification information corresponding to the query instruction to the third-party payment platform, so that the third-party payment platform sends the verification code to the user terminal indicated by the identification information.

To this end, according to another embodiment of the disclosure, a registration system for a third-party payment platform is also provided, which includes: the banking system, which is configured to receive the registration information of the user from the third-party payment platform and verify the registration information, and after the verification of the registration information succeeds, send the indication information for indicating that the verification of the registration information is passed to the third-party payment platform; the third-party payment platform, which is configured to receive the registration information of the user and send the registration information to the banking system for verification, and after the verification of the registration information is passed, when the registration information carries the identification information of the user terminal, send the verification code to the user terminal corresponding to the identification information, when the registration information does not carry the identification information, send the query instruction for querying the identification information to the banking system; the third-party payment platform is further configured to receive the identification information fed back by the banking system according to the query instruction and send the verification code to the user terminal indicated by the identification information, wherein the identification information is the user terminal identifier which is stored by the banking system when the user registers in the banking system; and the user terminal, which is configured to report the registration information to the third-party payment platform and receive the verification code sent by the third-party payment platform.

By means of the embodiments of the disclosure, the third-party payment platform sends the registration information of the user to the banking system for verification; when the registration information does not carry the first identification information, after the verification is passed by the banking system, the third-party payment platform queries the banking system to obtain the first identification information of the user and sends the verification code to the user terminal corresponding to the first identification information; when the registration information carries the first identification information, after the verification is passed by the banking system, the third-party payment platform sends the verification code to the user terminal corresponding to the first identification information; adopting such a technical means that the banking system interacts with the third-party payment platform solves the technical problem in the related art that there is not an effective technical solution for eliminating potential security issues in the process of quick payment, effectively prevents fraudulent registration in the process of quick payment of the third-party payment platform, and eliminates bugs in the existing system and ensures the security of quick payment without increasing the complexity of the system.

### Brief Description of the Drawings

The accompanying drawings described here are used for providing a deeper understanding of the disclosure, and constitute a part of the application; schematic embodiments of the disclosure and description thereof are used for illustrating the disclosure and not intended to form an improper limit to the disclosure. In the accompanying drawings:
Fig. 1 is a registration flowchart of a third-party payment platform in the related art;
Fig. 2 is a flowchart of a registration method for a third-party payment platform according to an embodiment of the disclosure;
Fig. 3 is a structure diagram of a registration device for a third-party payment platform according to an embodiment of the disclosure;
Fig. 4 is another flowchart of the registration method for a third-party payment platform according to an embodiment of the disclosure;
Fig. 5 is another structure diagram of the registration device for a third-party payment platform according to an embodiment of the disclosure;
Fig. 6 is a structure diagram of a registration system for a third-party payment platform according to an embodiment of the disclosure;
Fig. 7 is another structure diagram of the registration system for a third-party payment platform according to an embodiment of the disclosure;
Fig. 8 is a registration flowchart of a third-party payment platform according to a preferred embodiment of the disclosure; and
Fig. 9 is another registration flowchart of a third-party payment platform according to a preferred embodiment of the disclosure.

### Detailed Description of the Embodiments

The disclosure is described below with reference to the accompanying drawings and embodiments in detail. It is important to note that the embodiments of the disclosure and the characteristics in the embodiments can be combined under the condition of no conflicts.

Other features and advantages of the disclosure will be described later, and partially become obvious from the specification, or will be understood by implementing the disclosure. The purpose and other advantages of the disclosure can be achieved through structures specified in the specification, claims, and accompanying drawings.

Fig. 2 is a flowchart of a registration method for a third-party payment platform according to an embodiment of the disclosure. As shown in Fig. 2, the method is applied to the third-party payment platform and includes the following steps.

Step 202: the third-party payment platform sends registration information of a user to a banking system for verification.

Preferably, after Step 202, because the registration information includes different information, in the present embodiment, there are two cases to be discussed as the following Step 204 and Step 206.

Step 204: if the registration information carries first identification information, after the verification of the registration information is passed, a verification code is sent to a user corresponding to the first identification information, wherein the first identification information is user identification information stored by the banking system when the user registers in the banking system.

For better understanding the interaction between the third-party payment platform and the banking system when the registration information carries the first identification information, an illustration is given below in combination with a preferred embodiment. Note that, the preferred embodiment is only for illustrating but not intended to form an improper limit to the disclosure. The methods provided by the preferred embodiment of the disclosure ensure the consistency between information of a registered user of the third-party payment platform and information of a bank card holder by keeping key information (such as a cell phone number) in the third-party payment platform consistent with information in the banking system during the process of registration on the third-party payment platform. The first method is that when a user registers, the third-party payment platform sends registration information (including the name, identity number, bank card number, and cell phone number) filled by the user to the baking system for verification; only after the verification is passed, the registration is completed.

The specific implementation process is as follows:
1. the user fills the registration information, including the name, identity number, bank card number, and cell phone number, in the third-party payment platform, wherein the cell phone number must be input;
2. the third-party payment platform sends the registration information to the banking system for verification;
3. the banking system returns a verification result to the third-party payment platform;
4. after receiving the verification result of the banking system and judging that the verification result of the banking system is right, the third-party payment platform sends a short message to the cell phone number of the user, wherein the short message includes a verification code for registration, and the verification code has a valid time period;
5. the user inputs the verification code for registration in the valid time period and submits information to the third-party payment platform;
6. the third-party payment platform verifies the verification code for registration; if it is right, then the registration succeeds, and the user can use an account and password of the third-party payment platform to pay.

The advantage of the preferred embodiment is that user information cannot be read by the third-party payment platform directly from the banking system but can only be input by the user, so as to ensure that the third-party payment platform cannot obtain the user information in the banking system, thereby ensuring the security of the user information in the banking system.

Step 206: if the registration information does not carry the first identification information, after the verification of the registration information is passed, a query instruction for querying the first identification information is sent to the banking system; the first identification information fed back by the banking system according to the query instruction is received; and the verification code is sent to the user indicated by the first identification information.

For better understanding the interaction between the third-party payment platform and the banking system when the registration information does not carry the first identification information, an illustration is given below in combination with a preferred embodiment. Note that, the preferred embodiment is only for illustrating but not intended to form an improper limit to the disclosure. The preferred embodiment is that the third-party payment platform queries the banking system to obtain the cell phone number of the user; the specific implement process is as follows:
1. the user fills the registration information, including the name, identity number, and bank card number, in the third-party payment platform, wherein the cell phone number is not included;
2. the third-party payment platform sends the registration information to the banking system for verification;
3. the banking system returns a verification result to the third-party payment platform;
4. after receiving the verification result of the banking system and judging that the verification result of the banking system is right, the third-party payment platform sends the query instruction to the banking system to query the cell phone number of the user;
5. the banking system returns the cell phone number of the user to the third-party payment platform;
6. the third-party payment platform sends a short message to the cell phone number of the user, wherein the short message includes the verification code for registration, and the verification code has a valid time period;
7. the user inputs the verification code for registration in the valid time period and submits information to the third-party payment platform;
8. the third-party payment platform verifies the verification code for registration; if it is right, then the registration succeeds, and the user can use an account and password of the third-party payment platform to pay.

In the specific implementation process, the sequence of performing the steps that the third-party payment platform queries the cell phone number of the user and verifies the validity of identity can be adjusted freely according to actual needs, which falls into the scope of the embodiments of the disclosure.

optionally, the registration information also includes at least one of the followings: information of the name of the user, information of the identity card of the user, and information of the bank card number that the user registers in the banking system; the first identification information includes at least one of the followings: a user terminal identifier of the user and an e-mail address of the user.

Note that, after the above steps are performed, that is, after the third-party payment platform sends the verification code to the user, the third-party payment platform receives the information submitted after the user inputs the verification code during the valid time period of the verification code

Optionally, the method further includes verifying the registration information in the following way: when the registration information carries the first identification information, the first identification information is compared with the second identification information of the user stored in the banking system; if the first identification information is consistent with the second identification information, the verification is passed; or else, the verification fails.

By means of the steps in the embodiments of the disclosure, the third-party payment platform sends the registration information of the user to the banking system for verification; when the registration information does not carry the first identification information, after the verification is passed by the banking system, the third-party payment platform queries the banking system to obtain the first identification information of the user and sends the verification code to the user terminal corresponding to the first identification information; when the registration information carries the first identification information, after the verification is passed by the banking system, the third-party payment platform sends the verification code to the user terminal corresponding to the first identification information; adopting such a technical means that the banking system interacts with the third-party payment platform solves the technical problem in the related art that there is not an effective technical solution for eliminating potential security issues in the process of quick payment, effectively prevents fraudulent registration in the process of quick payment of the third-party payment platform, and eliminates bugs in the existing system and ensures the security of quick payment without increasing the complexity of the system.

A registration device for a third-party payment platform is also provided in the present embodiment, which is on the third-party payment platform and used for implementing the above embodiments and preferred implementations; these which have been illustrated will not be repeated here; the modules involved in the device are illustrated below. For example, the term "module" can implement a combination of software and/or hardware with expected functions. Although the device described in the following embodiment is implemented by software preferably, the implementation through hardware or the combination of software and hardware is possible and conceived.

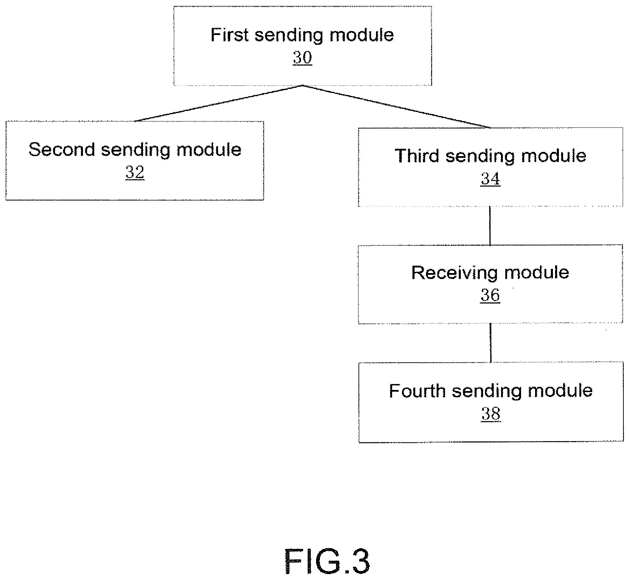

Fig. 3 is a structure diagram of a registration device for a third-party payment platform according to an embodiment of the disclosure. As shown in Fig. 3, the device includes:
a first sending module 30, which is configured to send the registration information of the user to the banking system for verification;
a second sending module 32, which is connected with the first sending module 30 and configured to, if the registration information carries the first identification information, after the verification of the registration information is passed, send the verification code to the user corresponding to the first identification information, wherein the first identification information is the user identification information stored by the banking system when the user registers in the banking system;
a third sending module 34, which is connected with the first sending module 30 and configured to, if the registration information does not carry the first identification information, after the verification of the registration information is passed, send the query instruction for querying the first identification information to the banking system;
a receiving module 36, which is connected with the third sending module 34 and configured to receive the first identification information fed back by the banking system according to the query instruction; and
a fourth sending module 38, which is connected with the receiving module 36 and configured to send the verification code to the user indicated by the first identification information.

By means of functions of these modules in the embodiments of the disclosure, the first sending module 30 sends, on the third-party payment platform, the registration information of the user to the banking system for verification; when the registration information does not carry the first identification information, after the verification is passed by the banking system, the third-party payment platform queries the banking system to obtain the first identification information of the user; the second sending module 32 sends the verification code to the user terminal corresponding to the first identification information; when the registration information carries the first identification information, after the verification is passed by the banking system, the third sending module 34 sends the query instruction for querying the first identification information to the banking system; the receiving module 36 receives the first identification information fed back by the banking system; the fourth sending module 38 sends the verification code to the user terminal corresponding to the first identification information; adopting such a technical means that the banking system interacts with the third-party payment platform solves the technical problem in the related art that there is not an effective technical solution for eliminating potential security issues in the process of quick payment, effectively prevents fraudulent registration in the process of quick payment of the third-party payment platform, and eliminates bugs in the existing system and ensures the security of quick payment without increasing the complexity of the system.

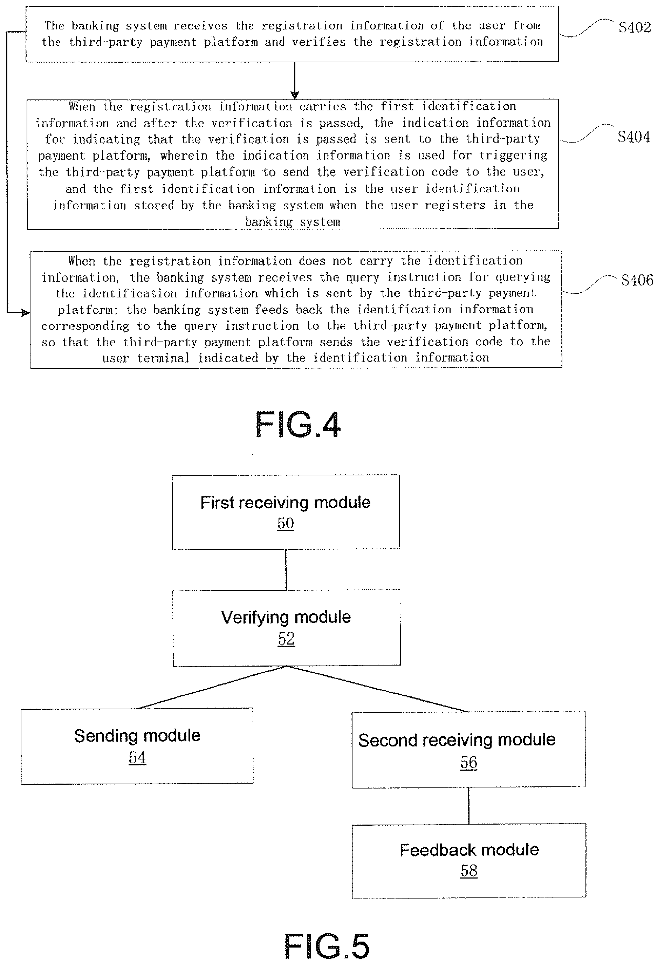

The disclosure also provides a registration method for a third-party payment platform, which is applied to the banking system. As shown in Fig. 4, the method includes the following steps.

Step 402: the banking system receives the registration information of the user from the third-party payment platform and verifies the registration information.

Step 404: if the registration information carries the first identification information, after the verification is passed, the indication information for indicating that the verification is passed is sent to the third-party payment platform, wherein the indication information is used for triggering the third-party payment platform to send the verification code to the user, and the first identification information is the user identification information stored by the banking system when the user registers in the banking system.

Step 406: if the registration information does not carry the identification information, the banking system receives the query instruction for querying the identification information which is sent by the third-party payment platform; the banking system feeds back the identification information corresponding to the query instruction to the third-party payment platform, so that the third-party payment platform sends the verification code to the user terminal indicated by the identification information.

Optionally, that the banking system receives the registration information of the user from the third-party payment platform and verifies the registration information includes that: the banking system compares the first identification information with the second identification information of the user stored by the banking system when the user registers in the banking system; and when the first identification information is consistent with the second identification information, the banking system sends the indication information for indicating that the verification is passed to the third-party payment platform.

By means of the steps in the embodiments of the disclosure, the third-party payment platform sends the registration information of the user to the banking system for verification; when the registration information does not carry the first identification information, after the verification is passed by the banking system, the third-party payment platform queries the banking system to obtain the first identification information of the user and sends the verification code to the user terminal corresponding to the first identification information; when the registration information carries the first identification information, after the verification is passed by the banking system, the third-party payment platform sends the verification code to the user terminal corresponding to the first identification information; adopting such a technical means that the banking system interacts with the third-party payment platform solves the technical problem in the related art that there is not an effective technical solution for eliminating potential security issues in the process of quick payment, effectively prevents fraudulent registration in the process of quick payment of the third-party payment platform, and eliminates bugs in the existing system and ensures the security of quick payment without increasing the complexity of the system.

A registration device for a third-party payment platform is also provided in the present embodiment, which is in the banking system and used for implementing the above embodiments and preferred implementations; these which have been illustrated will not be repeated here; the modules involved in the device are illustrated below. For example, the term "module" can implement a combination of software and/or hardware with expected functions. Although the device described in the following embodiment is implemented by software preferably, the implementation through hardware or the combination of software and hardware is possible and conceived. Fig. 5 is another structure diagram of the registration device for a third-party payment platform according to an embodiment of the disclosure. As shown in Fig. 5, the device includes:
a first receiving module 50, which is configured to the receive registration information of the user from the third-party payment platform;
a verifying module 52, which is configured to verify the registration information;
a sending module 54, which is connected with the verifying module 52 and configured to, if the registration information carries the first identification information, after the verification is passed, send the indication information for indicating that the verification to the third-party payment platform, wherein the indication information is used for triggering the third-party payment platform to send the verification code to the user, and the first identification information is the user identification information stored by the banking system when the user registers in the banking system.
a second receiving module 56, which is connected with the verifying module 52 and configured to, if the registration information does not carry the identification information, receive the query instruction for querying the identification information which is sent by the third-party payment platform; and
a feedback module 58, which is connected with the second receiving module 56 and configured to feed back the identification information corresponding to the query instruction to the third-party payment platform, so that the third-party payment platform sends the verification code to the user terminal indicated by the identification information.

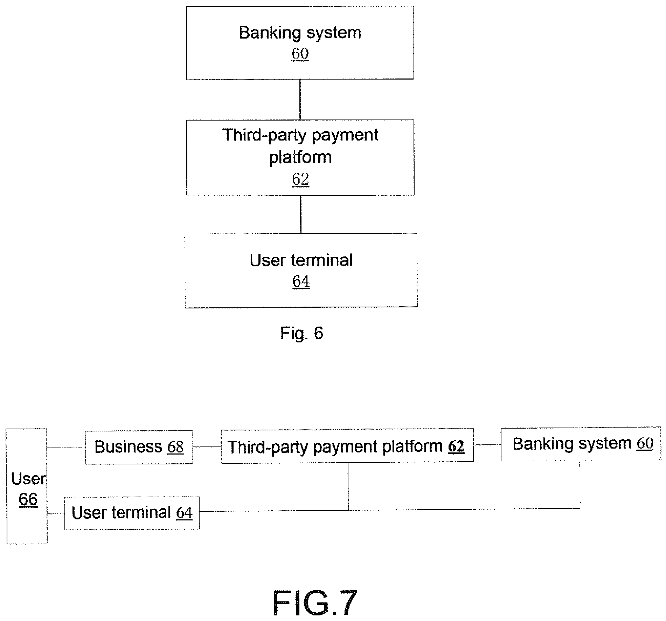

The disclosure also provides a registration system for a third-party payment platform. As shown in Fig. 6, the system includes:
a banking system 60, which is configured to receive the registration information of the user from the third-party payment platform and verify the registration information, and after the verification succeeds, send the indication information for indicating that the verification is passed to the third-party payment platform;
a third-party payment platform 62, which is connected with the banking system 60 and configured to receive the registration information of the user and send the registration information to the banking system for verification, and after the verification is passed, if the registration information carries the identification information of the user terminal, send the verification code to the user terminal corresponding to the identification information, if the registration information does not carry the identification information, send the query instruction for querying the identification information to the banking system; the third-party payment platform is further configured to receive the identification information fed back by the banking system according to the query instruction and send the verification code to the user terminal indicated by the identification information, wherein the identification information is the user terminal identifier which is stored by the banking system when the user registers in the banking system; and
a user terminal 64, which is connected with the third-party payment platform 62 and configured to report the registration information to the third-party payment platform and receive the verification code sent by the third-party payment platform.

In the present embodiment, the preferred embodiment of the disclosure can be understood through a system composed of a user, a business, a third-party payment platform, a bank and a cell phone. As shown in Fig. 7, the user 66: plans to shop over the Internet and use the third-party payment platform to implement quick payment. The buyer needs to register on the third-party payment platform in advance; the business 68: sells on an e-commerce platform and provides shopping consultations and delivery of goods, which is not specially required in the disclosure. The third-party payment platform 62: takes charge of providing payment services, allows the buyer to register on the payment platform by establishing an authorized payment agreement with the bank where the buyer opens an account, and implements for the buyer association between an account of the payment platform and one or more bank accounts of the buyer. When a payment request is received from the buyer, a deduction from the corresponding bank account is implemented. In the disclosure, it is needed to improve the flow of registration. The banking system 60: provides financial services, such as verification of identity information and fund transfer, for the user and the third-party payment platform. In the disclosure, it is needed to improve the flow of verifying the information provided for the third-party payment platform. The user terminal 64: is used for receiving information of the verification code for registration form the third-party payment platform, which is not specially required in the disclosure.

For better understanding the interaction among the third-party payment platform, the banking system, and the user terminal in the above embodiment, an illustration is given below in combination with a preferred embodiment. Note that, the preferred embodiment is only for illustrating but not intended to form an improper limit to the disclosure.

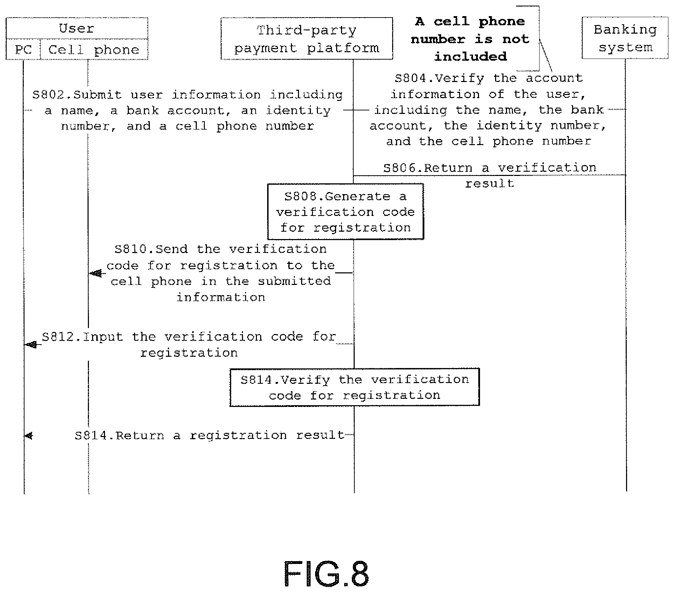

Fig. 8 is a registration flowchart of a third-party payment platform according to a preferred embodiment of the disclosure. The flow includes the following steps:
Step 802: the user fills the registration information, including the name, the identity number, the bank card number, and the cell phone number, in the third-party payment platform, wherein the cell phone number must be input;
Step 804: the third-party payment platform sends the registration information to the banking system for verification;
Step 806: the banking system returns a verification result to the third-party payment platform;
Step 808: after receiving the verification result of the banking system and judging that the verification result of the banking system is right, the third-party payment platform generates the verification code for registration;
Step 810: the third-party payment platform sends a short message to the cell phone number of the user, wherein the short message includes the verification code for registration, and the verification code has a valid time period;
Step 812: the user inputs the verification code for registration in the valid time period and submits information to the third-party payment platform; and
Step 814: the third-party payment platform verifies the verification code for registration; if it is right, then the registration succeeds, and the user can use an account and password of the third-party payment platform to pay, and returns a registration result;

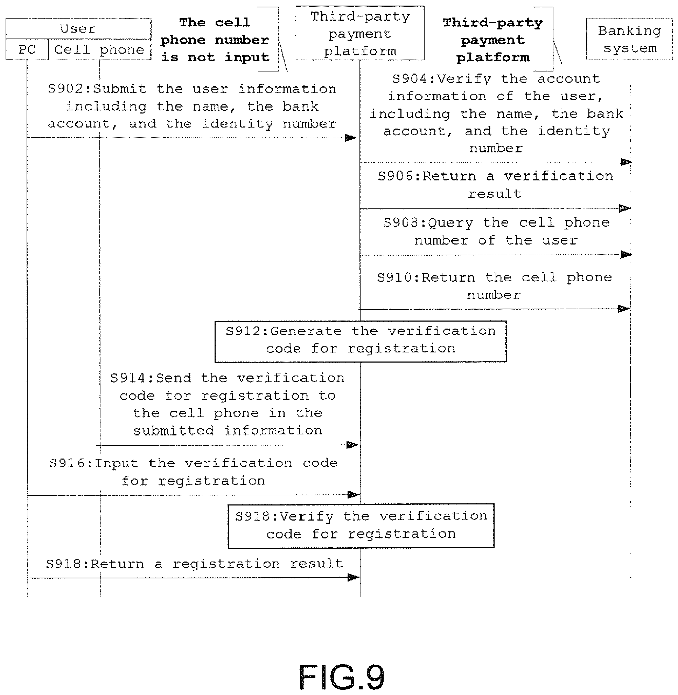

Fig. 9 is another registration flowchart of a third-party payment platform according to a preferred embodiment of the disclosure. As shown in Fig. 9, the flow includes the following steps:
Step 902: the user fills the registration information, including the name, identity number, and bank card number, in the third-party payment platform, wherein the cell phone number is not included;
Step 904: the third-party payment platform sends the registration information to the banking system for verification;
Step 906: the banking system returns a verification result to the third-party payment platform;
Step 908: after receiving the verification result of the banking system and judging that the verification result of the banking system is right, the third-party payment platform sends the query instruction to the banking system to query the cell phone number of the user;
Step 910: the banking system returns the cell phone number of the user to the third-party payment platform;
Step 912: the third-party payment platform generates the verification code for registration;
Step 914: the third-party payment platform sends a short message to the cell phone number of the user, wherein the short message includes the verification code for registration, and the verification code has a valid time period;
Step 916: the user inputs the verification code for registration in the valid time period and submits information to the third-party payment platform; and
Step 918: the third-party payment platform verifies the verification code for registration; if it is right, then the registration succeeds, and the user can use an account and password of the third-party payment platform to pay, and returns a registration result;

To sum up, by means of two methods provided in the embodiments of the disclosure, the disclosure achieves the following beneficial effects: effectively solving bugs in the process of registering on the third-party payment platform, preventing a malicious user from collecting semi-public information of a valid user and illegally using the identity of the valid user to register on the third-party payment platform, and effectively improving the security of the valid user using the third-party payment platform.

In another embodiment, a piece of software is also provided, which is used for implementing the technical solutions described in the above embodiments and preferred embodiments.

In another embodiment, a storage medium is also provided, which stores the software and includes, but is not limited to, an optical disk, a floppy disk, a hard disk, an erasable memory, and so on.

Obviously, those skilled in the art should appreciate that the above modules and steps of the disclosure can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; and in some situations, the presented or described steps can be executed in an order different from that described here; or they are made into integrated circuit modules, respectively; or multiple modules and steps of them are made into a single integrated circuit module to realize. In this way, the disclosure is not limited to any particular combination of hardware and software.

The above is only the preferred embodiment of the disclosure and not intended to limit the disclosure; for those skilled in the art, the disclosure may have various modifications and changes. Any modifications, equivalent replacements, improvements and the like within the spirit and principle of the disclosure shall fall within the scope of the claims of the disclosure.

### Industrial Applicability

The technical solution provided by the disclosure which can be applied to the third-party payment platform solves the technical problem in the related art that there is not an effective technical solution for eliminating potential security issues in the process of quick payment, effectively prevents fraudulent registration in the process of quick payment of the third-party payment platform, and eliminates bugs in the existing system and ensures the security of quick payment without increasing the complexity of the system.

## Claims

1. A registration method for a third-party payment platform, comprising:
sending, by a third-party payment platform, registration information of a user to a banking system for verification;
when the registration information carries first identification information, after the verification of the registration information is passed, sending a verification code to a user corresponding to the first identification information, wherein the first identification information is user identification information stored by the banking system when the user registers in the banking system;
when the registration information does not carry the first identification information, after the verification of the registration information is passed, sending a query instruction for querying the first identification information to the banking system; receiving the first identification information fed back by the banking system according to the query instruction; and sending the verification code to the user indicated by the first identification information.

2. The method as claimed in claim 1, wherein the registration information further comprises at least one of the followings:
information of a name of the user, information of an identity card of the user, and information of a bank card number that the user registers in the banking system.

3. The method as claimed in claim 2, wherein the first identification information comprises at least one of the followings: a user terminal identifier of the user, an e-mail address of the user.

4. The method as claimed in claim 3, wherein after the sending, by the third-party payment platform, the verification code to the user, further comprising:
receiving, by the third-party payment platform, information submitted after the user inputs the verification code within a valid time period of the verification code.

5. The method as claimed in claim 3, further comprising:
verifying the registration information in the following way:
when the registration information carries the first identification information, comparing the first identification information with second identification information of the user stored in the banking system; and
when the first identification information is consistent with the second identification information, the verification of the registration information is passed;
or else, the verification of the registration information fails.

6. A registration method for a third-party payment platform, comprising:
receiving, by a banking system, registration information of a user from a third-party payment platform, and verifying the registration information;
when the registration information carries first identification information, after the verification of the registration information is passed, sending indication information for indicating that the verification of the registration information is passed to the third-party payment platform, wherein the indication information is used for triggering the third-party payment platform to send a verification code to the user, and the first identification information is user identification information stored by the banking system when the user registers in the banking system;
when the registration information does not carry the identification information, receiving, by the banking system from the third-party payment platform, a query instruction for querying the identification information; and feeding back, by the banking system, the identification information corresponding to the query instruction to the third-party payment platform, so that the third-party payment platform sends the verification code to a user terminal indicated by the identification information.

7. The method as claimed in claim 6, wherein receiving, by the banking system, the registration information of the user from the third-party payment platform and verifying the registration information comprises:
comparing, by the banking system, the first identification information with second identification information of the user stored by the banking system when the user registers in the banking system; and
when the first identification information is consistent with the second identification information, sending, by the banking system, indication information for indicating that the verification of the registration information is passed to the third-party payment platform.

8. A registration device for a third-party payment platform, which is located on the third-party payment platform, comprising:
a first sending module, which is configured to send registration information of a user to a banking system for verification;
a second sending module, which is configured to, when the registration information carries first identification information, after the verification of the registration information is passed, send a verification code to a user corresponding to the first identification information,
wherein the first identification information is user identification information stored by the banking system when the user registers in the banking system;
a third sending module, which is configured to, when the registration information does not carry the first identification information, after the verification of the registration information is passed, send a query instruction for querying the first identification information to the banking system;
a receiving module, which is configured to receive the first identification information fed back by the banking system according to the query instruction; and
a fourth sending module, which is configured to send the verification code to the user indicated by the first identification information.

9. A registration device for a third-party payment platform, which is located in a banking system, comprising:
a first receiving module, which is configured to receive registration information of a user from a third-party payment platform;
a verifying module, which is configured to verify the registration information;
a sending module, which is configured to, when the registration information carries first identification information, after the verification of the registration information is passed, send indication information for indicating that the verification of the registration information is passed to the third-party payment platform, wherein the indication information is used for triggering the third-party payment platform to send a verification code to the user, and the first identification information is user identification information stored by the banking system when the user registers in the banking system;
a second receiving module, which is configured to, when the registration information does not carry the identification information, receive, from the third-party payment platform, a query instruction for querying the identification information; and
a feedback module, which is configured to feed back the identification information corresponding to the query instruction to the third-party payment platform, so that the third-party payment platform sends the verification code to a user terminal indicated by the identification information.

10. A registration system for a third-party payment platform, comprising:
a banking system, which is configured to receive registration information of a user from a third-party payment platform and verify the registration information,
and after the verification of the registration information succeeds, send indication information for indicating that the verification of the registration information is passed to the third-party payment platform;
a third-party payment platform, which is configured to receive the registration information of the user and send the registration information to the banking system for verification, and after the verification of the registration information is passed, when the registration information carries identification information of a user terminal, send a verification code to the user terminal corresponding to the identification information, when the registration information does not carry the identification information, send a query instruction for querying the identification information to the banking system; the third-party payment platform is further configured to receive the identification information fed back by the banking system according to the query instruction and send the verification code to the user terminal indicated by the identification information, wherein the identification information is a user terminal identifier which is stored by the banking system when the user registers in the banking system; and
a user terminal, which is configured to report the registration information to the third-party payment platform and receive the verification code sent by the third-party payment platform.
